# EUROPÄISCHE PATENTSCHRIFT

(11) **EP 1 878 554 B1**
(45) Veröffentlichungstag und Bekanntmachung des Hinweises auf die Patenterteilung: **17.06.2015**
(21) Anmeldenummer: 07013747.6
(22) Anmeldetag: 13.07.2007
(51) Int. Cl.: B29C 44/42, B29B 7/74

(54) **Schäumwerkzeug**
Foaming tool
Outil de moussage

(30) Priorität: 13.07.2006 DE 202006010883 U
(43) Veröffentlichungstag der Anmeldung: 16.01.2008
(73) Patentinhaber: BBG GmbH & Co. KG, 87719 Mindelheim (DE)
(72) Erfinder: Weiss, Oliver, 87733 Markt Rettenbach (DE)
(74) Vertreter: Fiener, Josef

(56) Entgegenhaltungen:
- DE-A1- 2 244 993
- DE-A1- 4 411 161
- DE-U1- 29 811 497
- US-A- 2 781 199
- US-A- 3 521 511

## Beschreibung

Die Erfindung betrifft ein Schäumwerkzeug gemäß dem Obergriff des Anspruchs 1.

Schäumwerkzeuge werden in der Praxis zur Verarbeitung von Duroplast-Materialien und hierbei insbesondere zur Herstellung von Formteilen aus Polyurethan (PU) verwendet.
Die Formwerkzeuge verfügen dabei üblicherweise über wenigstens zwei Hälften, in denen die Negativform des herzustellenden Teils als Formnest eingebracht ist. Zwischen den Werkzeughälften verläuft ein Angusskanal, der sich von der Werkzeugaussenkante bis zum Formnest erstreckt und über den die Formmassen in das Formnest eingetragen werden.
Je nach Formmasse weisen die verwendeten Werkzeuge einen unterschiedlichen Aufbau auf. Während beispielsweise Formmassen beim sog. Thermoplastschaumguss im Spritzgussverfahren verarbeitet werden, setzt das Reaktionsschaumguss-Verfahren das Vorhandensein eines Mischkopfes voraus, in dem die verschiedenen, in den Formmassen wirkenden Reaktionspartner gemischt und anschließend in das Formnest eingespritzt werden.

Bekannte Schäumwerkzeuge weisen im Bereich der Austrittsöffnung des Angusskanals eine Aufnahmeplatte auf, an der ein Mischkopf nach Aufsetzen befestigt werden kann. Die Befestigung erfolgt in der Regel über Schrauben oder hydraulische Spannmittel.

In der Produktion, insbesondere von Kleinserien und/oder Prototypen, erweist sich die Befestigung des Mischkopfes mittels Schrauben als nachteilig, da der Vorgang des Anlegens bzw. Lösens der Schrauben mit sehr hohem Zeitaufwand verbunden ist. Hinzu kommt, dass sich die Schäumwerkzeuge im Verlauf des Schäumvorganges stark aufheizen und deshalb zur Demontage die Beweglichkeit einschränkende Schutzkleidung getragen werden muss, wodurch besonders die Demontage des Mischkopfes noch zeitintensiver wird. Bei der Verwendung hydraulischer Spannmittel müssen am Mischkopf, zusätzlich zu den dort bereits vorhandenen Schlauchleitungen, zusätzliche Hydraulikschläuche angebracht werden, wodurch der gesamte Mischkopf unhandlicher und schwerer wird. Außerdem geht mit der Verwendung eines Hydrauliksystems ein wesentlich höherer Wartungsaufwand einher.

Aufgabe der vorliegenden Erfindung ist es daher, eine Vorrichtung zu schaffen, die eine schnelle und einfache Montage bzw. Demontage eines Mischkopfes an einem Schäumwerkzeug ermöglicht und mit der bestehende Systeme einfach nachgerüstet werden können.

Diese Aufgabe wird durch ein Schäumwerkzeug mit den Merkmalen des Anspruchs 1 gelöst. Weitere vorteilhafte Ausführungsform der Erfindung sind Gegenstand der abhängigen Ansprüche.

Die vorliegende Erfindung stellt ein Schäumwerkzeug zur Verfügung, das über wenigstens zwei Werkzeughälften und einen daran ankoppelbaren Mischkopf verfügt. Das Schäumwerkzeug weist dabei werkzeugseitig eine Aufnahmeplatte mit Seitenflächen und Hauptflächen, die einerseits den Werkzeughälften und andererseits dem Mischkopf zugewandt sind, auf. Darüber hinaus ist in der Hauptfläche wenigstens eine im wesentlichen zentral angeordnete Ausnehmung vorgesehen, in die eine Mischkopfdüse eingeführt werden kann. Die Ausnehmung stellt die Verlängerung des Angusskanals dar, über den die Formmasse nach der Mischung im Mischkopf in das Formnest eingetragen wird. Mischkopfseitig ist eine an den Werkzeughälften anbringbare Halteplatte mit der vorspringenden, im wesentlichen zentral angeordneten Mischkopfdüse vorgesehen. Das Schäumwerkzeug ist dadurch gekennzeichnet, dass die Halteplatte wenigstens einen relativ zur Mischkopfdüse angeordneten, sich in Richtung der Werkzeughälften erstreckenden Bolzen mit quer verlaufender Nut aufweist und in der Hauptfläche wenigstens eine entsprechend zur Anordnung des Bolzens positionierte Ausnehmung vorgesehen ist, die zur Aufnahme des Bolzens dient. Dabei ist in die Seitenflächen wenigstens eine erste Bohrung zur Aufnahme eines mit der Nut in Eingriff bringbaren Spannelementes eingebracht.

Die erste Bohrung kann dabei je nach Ausgestaltung des Mischkopfes bzw. nach Ausrichtung der Formwerkzeuge entweder in senkrechter und/oder horizontaler Richtung in der Aufnahmeplatte ausgerichtet sein. Herkömmliche Systeme können zudem einfach zum erfindungsgemäßen Schäumwerkzeug umgerüstet werden. Hierzu müssen die entsprechenden Halte- bzw. Aufnahmeplatten des ursprünglichen Werkzeuges gegen die Halte- bzw. Aufnahmeplatten des erfindungsgemäßen Schäumwerkzeuges ausgetauscht werden.

Bevorzugt ist das Spannelement als Exzenter ausgebildet, dessen Stiftbolzen mit einer Kulissenführung versehen ist, die mit einem in der Nut vorgesehenen Vorsprung in Eingriff steht. Durch das Zusammenwirken des Vorsprungs mit der Kulissenführung wird eine Zwangsführung des Spannelements erreicht. Es reicht somit bei der Montage des Mischkopfes nur etwa eine halbe Umdrehung des Spannelementes aus, um den Mischkopf sicher und stabil an der Aufnahmeplatte zu verspannen.

Eine weitere vorteilhafte Ausführungsform der vorliegenden Erfindung sieht vor, das Spannelement als eine die gesamte Aufnahmeplatte durchdringende Stange auszubilden, die insbesondere mit wenigstens einer Kulissenführung ausgestattet ist, die der Anordnung des Bolzens entsprechend angeordnet ist und die Nut einen mit der Kulissenführung in Eingriff stehenden Vorsprung aufweist. Ein entsprechend ausgebildetes Spannelement ermöglicht beispielsweise bei nur einseitigem Zugang zum Werkzeug ebenfalls eine einfache, schnelle und stabile Montage des Mischkopfes.

In einer bevorzugten Ausführungsform der vorliegenden Erfindung verfügt die Kulissenführung über einen axial verlaufenden Schlitz mit wenigstens zwei Schlitzabwinklungen.

In einer weiteren vorteilhaften Ausführungsform der vorliegenden Erfindung ist vorgesehen, in der Hauptfläche eine senkrecht zur ersten Bohrung angeordnete und mit dieser in Verbindung stehende zweite Bohrung anzubringen, die eine in die Kulissenführung eingreifende Schraube aufnimmt und das Spannelement somit gegen Herausfallen aus der Aufnahmeplatte sichert. Als Schraube kommt hierfür beispielsweise eine Zylinderschraube mit Innensechskant oder eine sog. Madenschraube in Betracht, die vollständig in der Aufnahmeplatte versenkt werden kann.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen und nicht maßstabsgetreuen Zeichnungen. Es zeigen:
Fig. 1 eine bevorzugte Ausführungsform der Aufnahme- bzw. Halteplatte eines erfindungsgemäßen Schäumwerkzeuges in perspektivischer Explosionsdarstellung,
Fig. 2 eine bevorzugte Ausführungsform der Aufnahme- bzw. Halteplatte im montierten Zustand in perspektivischer Darstellung, und
Fig. 3 einen ankopplungsbereiten Mischkopf ebenfalls in perspektivischer Darstellung.

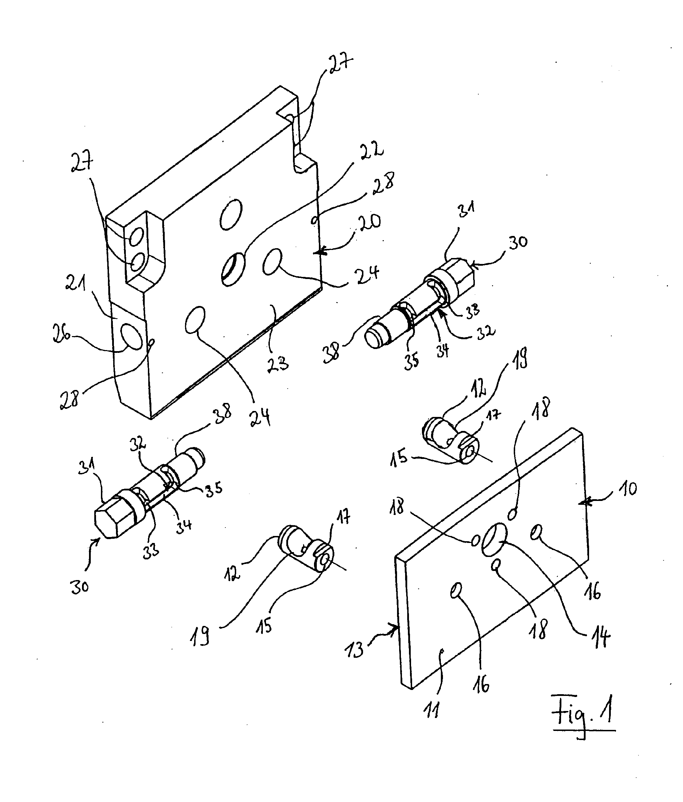

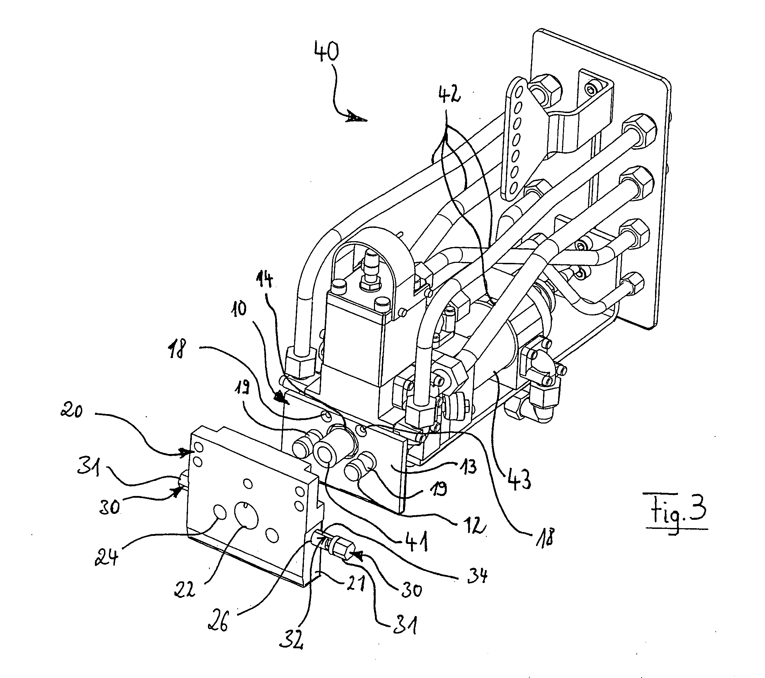

Fig. 1 zeigt die Bestandteile der Halteplatte 10 bzw. der Aufnahmeplatte 20 des erfindungsgemäßen Schäumwerkzeuges. Die Halteplatte 10 weist eine dem Mischkopf zugewandte Seite 11 und eine den Werkzeughälften zugewandete Seite 13 auf und ist in der Praxis fest mit dem in Fig. 3 gezeigten Mischkopf 40 verbunden. Die Positionierung der Halteplatte 10 am Mischkopf 40 erfolgt über drei im Mischkopf 40 vorgesehene Bohrungen in denen Senkkopfschrauben verspannt werden können. Diese werden dazu durch

Positionierungsausnehmungen 18 in der Halteplatte 10 gesteckt. Ebenfalls in der Halteplatte 10 sind Bolzen 12 befestigt. Diese Bolzen 12 weisen tangentiale Segmentausschnitte 17 auf, um in definierter Ausrichtung von der Halteplatte 10 aufgenommen zu werden. Zusätzlich sind in den Bolzen 12 Innengewinde 15 eingeschnitten, um über die beiden Bohrungen 16 mit der Halteplatte 10 verschraubt zu werden. Es wird somit ein sicherer Halt für die Bolzen 12 erreicht. Selbstverständlich können die Bolzen 12 auch auf andere Art und Weise mit der Halteplatte 10 verbunden werden. Denkbar sind hierfür alle geeigneten Fügetechniken, wie beispielsweise Schweißen, Löten oder Kleben.

Im Ausführungsbeispiel der Fig.1 ist in der Halteplatte 10 eine Durchführungsöffnung 14 für die Düse 41 des Mischkopfes 40 zentral angeordnet. Die Bolzen 12, die zur Montage des Mischkopfes 40 in die entsprechenden Aufnahmen 24 der Aufnahmeplatte 20 eingeführt werden, verfügen über Nuten 19, die mit dem Stiftbolzen 38 der Spannelemente 30 in Eingriff stehen. Im Ausführungsbeispiel der Fig. 1 sind die Spannelemente 30 als Exzenter mit Sechskantschraubenköpfen 31 ausgebildet. Die Stiftbolzen 38 der Exzenter weisen Schlitze 34 mit an den Enden senkrecht verlaufenden Schlitzabwinklungen 33, 35 auf, die Kulissenführungen 32 bilden.

Die Aufnahmeplatte 20 weist in ihrer Hauptfläche 23 eine zentrale, die Aufnahmeplatte 20 durchdringende Ausnehmung 22 auf, in die bei Montage des Mischkopfes 40 die Düse 41 eingeführt wird. Zusätzlich zur Ausnehmung 22 sind zwei Aufnahmen 24 für die an der Halteplatte angeordneten Bolzen 12 vorgesehen. Im Bereich der Seitenränder der Hauptfläche 23 sind kleiner dimensionierte zweite Bohrungen 28 senkrecht zu den ersten Bohrungen 26 angeordnet. In diese werden Schrauben eingesetzt, die nach Eingriff in die Schlitzabwinkelungen 33, 35 der Kulissenführungen 32 das Herausrutschen der Spannelemente 30 wirkungsvoll verhindern. Die in der Hauptfläche vorgesehenen Durchgangslöcher 27 dienen zum dauerhaften Anbringen der Aufnahmeplatte 20 an den entsprechenden Werkzeughälften.

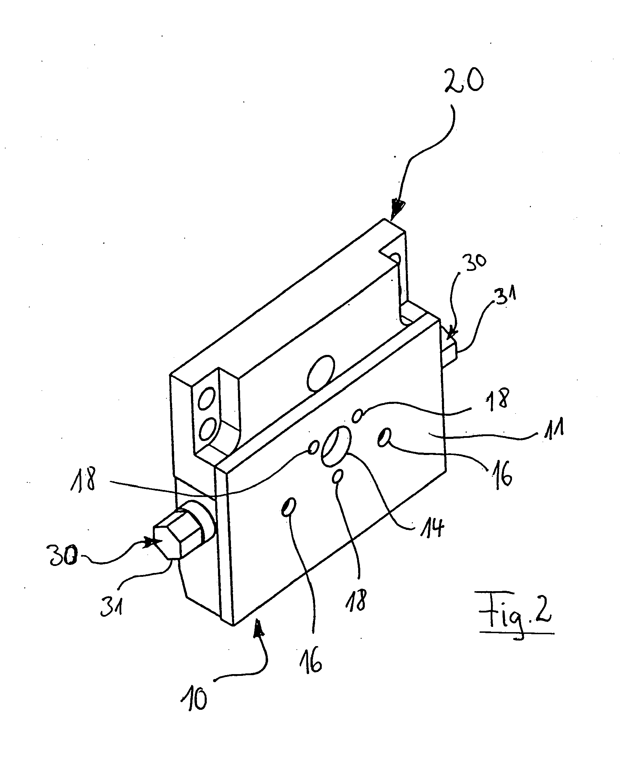

Fig. 2 zeigt eine an der Aufnahmeplatte 20 angebrachte Halteplatte 10. In der Halteplatte 10 ist die Durchführungsöffnung 14 zu erkennen, die mit der in Fig. 2 nicht sichtbaren Ausnehmung 22 deckungsgleich ist. Ebenfalls gezeigt werden die Positionierungsausnehmungen 18, die in bestimmten Positionen um die Durchführungsöffnung 14 angeordnet sind, um eine Fehlmontage von Mischkopf 40 und Halteplatte 10 auszuschließen. Die Bohrungen 16 dienen zur Befestigung der Bolzen 12 an der Halteplatte 10 und werden von der dem Mischkopf zugewandten Seite 11 der Halteplatte 10 her verschraubt. Die Lösung von Halteplatte 10 und Aufnahmeplatte 20 erfolgt durch Drehung des Spannelementes 30 und anschließendem Herausziehen aus der Aufnahmeplatte 20. Die Drehung kann einfach und schnell beispielsweise mit einem am Sechskantkopf 31 des Spannelementes 30 angreifenden Schraubenschlüssel durchgeführt werden.

Fig. 3 zeigt den Mischkopf 40 des erfindungsgemäßen Schäumwerkzeuges in montagebereitem Zustand. Es handelt sich hierbei um einen Mischkopf 40 zur Verwendung mit einem Reaktionsschaumguss-Verfahren. Der Mischkopf 40 weist zahlreiche Schlauchleitungen 42 zur Einleitung der Reaktionspartner der gewünschten Formmasse in die Mischkammer 43 auf. Im Ausführungsbeispiel der Fig. 3 ist die Halteplatte 10 mit dem Mischkopf 40 verbunden und die Düse 41 durch die zentral in der Halteplatte 10 angeordneten Durchführungsöffnung 14 geführt. Die Halteplatte 10 ist über Senkkopfschrauben mit dem Mischkopf 40 verbunden. Diese sind von der den Werkzeughälften zugewandten Seite 13 her in die Positionierungsausnehmungen 18 in der Halteplatte 10 eingesteckt und angelegt. Im vorliegenden Ausführungsbeispiel sind an der Halteplatte 10 zwei Bolzen 12 mit quer angeordneter Nut 19 angeordnet. Die Bolzen 12 sind zum Eingriff mit der Aufnahmeplatte 20 vorgesehen. Aus den ersten Bohrungen 26 in den Seitenflächen 21 der Aufnahmeplatte 20 ragen im ungespannten Zustand die Spannelemente 30 hervor. Zur Montage des Mischkopfes 40 wird das Spannelement 30 zunächst soweit wie durch die Kulissenführung bzw. durch die in diese eingreifende Madenschraube zugelassen aus der Aufnahmeplatte 20 herausgezogen, die Halteplatte 10 des Mischkopfes 40 an die an einer der Werkzeughälften befestigte Aufnahmeplatte 20 herangeführt und die Düse 41 sowie die Bolzen 12 in die entsprechenden Ausnehmung 22 bzw. Aufnahmen 24 eingeführt. Danach wird das in der ersten Bohrungen 26 gelagerte Spannelement 30 in die Aufnahmeplatte 20 und in die Nut 19 des Bolzens 12 eingeschoben und Halteplatte 10 und Aufnahmeplatte 20 dadurch vorgespannt. Durch etwa eine halbe Umdrehung des Sechskantkopfes 31 des als Exzenter ausgebildeten Spannelementes 30 wird die Halteplatte 10 vollständig mit der Aufnahmeplatte 20 verspannt. Zur Demontage des Mischkopfes 40 wird in umgekehrter Reihenfolge verfahren.

### Bezugszeichenliste

10 = Halteplatte
11 = dem Mischkopf zugewandte Seite der Halteplatte 10
12 = Bolzen
13 = den Werkzeughälften zugewandte Seite der Halteplatte 10
14 = Durchführungsöffnung
15 = Gewinde
16 = Bohrungen
17 = Segmentausschnitte
18 = Positionierungsausnehmung
19 = Nut
20 = Aufnahmeplatte
21 = Seitenfläche
22 = Ausnehmung
23 = Hauptfläche
24 = Aufnahme
26 = erste Bohrung
27 = Durchgangsloch
28 = zweite Bohrung
30 = Spannelement
31 = Sechskantschraubenkopf
32 = Kulissenführung
33 = erste Schlitzabwinkelung
34 = Schlitz
35 = zweite Schlitzabwinkelung
38 = Stiftbolzen
40 = Mischkopf
41 = Düse
42 = Schlauchleitung
43 = Mischkammer

## Patentansprüche

1. Schäumwerkzeug mit wenigstens zwei Werkzeughälften und einem daran ankoppelbaren Mischkopf (40), wobei
- eine werkzeugseitig angeordnete Aufnahmeplatte (20) mit Seitenflächen (21) und einerseits den Werkzeughälften und andererseits dem Mischkopf zugewandten Hauptflächen (23),
- wenigstens eine im wesentlichen zentral in der Hauptfläche (23) angeordnete Ausnehmung (22) zur Aufnahme einer Mischkopfdüse (41), und
- mischkopfseitig eine an den Werkzeughälften anbringbare Halteplatte (10) mit der vorspringenden, im wesentlichen zentral angeordneten Mischkopfdüse (41) vorgesehen sind,
**dadurch gekennzeichnet, dass**
die Halteplatte (10) fest mit dem Mischkopf (40) verbunden ist und wenigstens einen relativ zur Mischkopfdüse (41) angeordneten, sich in Richtung der Werkzeughälften erstreckenden Bolzen (12) mit quer verlaufender Nut (19) aufweist und in der Hauptfläche (23) wenigstens eine entsprechend zur Anordnung des Bolzens (12) positionierte Aufnahme (24) zur Aufnahme des Bolzens (12) vorgesehen ist und wobei in die Seitenflächen (21) wenigstens eine erste Bohrung (26) zur Aufnahme eines mit der Nut (19) in Eingriff bringbaren Spannelementes (30) eingebracht ist.

2. Schäumwerkzeug nach Anspruch 1,
**dadurch gekennzeichnet, dass**
das Spannelement (30) als Exzenter mit einer im Stiftbolzen (38) vorgesehenen Kulissenführung (32) ausgebildet ist.

3. Schäumwerkzeug nach Anspruch 1,
**dadurch gekennzeichnet, dass**
das Spannelement (30) als die gesamte Aufnahmeplatte (20) durchdringende Stange, insbesondere mit einer der Anordnung des Bolzens (12) entsprechenden Anordnung wenigstens einer Kulissenführung (32), ausgebildet ist.

4. Schäumwerkzeug nach Anspruch 2 oder 3,
**dadurch gekennzeichnet, dass**
die Kulissenführung (32) einen axial verlaufenden Schlitz (34) mit wenigstens zwei Schlitzabwinklungen (33, 35) aufweist.

5. Schäumwerkzeug nach einem der vorhergehenden Ansprüche,
**dadurch gekennzeichnet, dass**
in der Hauptfläche (23) eine senkrecht zur ersten Bohrung (26) angeordnete und mit dieser in Verbindung stehende zweite Bohrung (28) zur Aufnahme einer in die Kulissenführung (32) eingreifenden Schraube vorgesehen ist.

## Claims

1. Foaming tool with at least two tool halves and a mixing head (40), coupled thereto, having
- a receiving plate (20) arranged at the tool, having side surfaces (21) and main surfaces (23), directed to the tool halves on one hand and to the mixing head on the other hand,
- at least one recess (22), being substantially centrally located in the main surface (23) for receiving a mixing nozzle (41), and
- a holding plate (10) attachable to the mixing head side with the projecting, substantially centrally disposed mixing nozzle (41),
**characterized in that**
the holding plate (10) is fixedly connected to the mixing head (40) and has at least one bolt (12) disposed relative to the mixing nozzle (41) in the direction of the tool halves and having a transversely extending groove (19) as well as at least one receptacle (24) in the main surface (23) corresponding to the arrangement of the bolt (12) for receiving the bolt (12), and wherein the side surfaces (21) include at least a first bore (26) for receiving a clamping element (30) being engageable with of the groove (19).

2. Foaming tool according to Claim 1, **characterized in that**
the clamping element (30) is formed as an eccentric with a link guide (32) provided in the pin bolt (38).

3. Foaming tool according to Claim 1, **characterized in that**
the clamping element (30) is formed as a rod penetrating the whole receiving plate (20), in particular with at least one link guide (32) corresponding to the arrangement of the bolt (12).

4. Foaming tool according to Claim 2 or 3, **characterized in that**
the link guide (32) has an axially extending slot (34) having at least two angled slots (33, 35).

5. Foaming tool according to one of the preceding claims, **characterized in that**
a second bore (28) is disposed in the main surface (23) perpendicular to the first bore (26) and in communication with this for receiving a screw engaging in the link guide (32).

## Revendications

1. Outil de moussage comprenant au moins deux moitiés d'outil et une tête de mélange (40) pouvant être couplée à ces dernières, dans lequel sont prévus
- une platine de réception (20) située côté outil, qui comprend des surfaces latérales (21) et des surfaces principales (23) tournées, d'une part, vers lesdites moitiés de l'outil et, d'autre part, vers ladite tête de mélange,
- au moins un évidement (22) ménagé, pour l'essentiel, centralement dans la surface principale (23) et destiné à recevoir une buse (41) de ladite tête de mélange, et
- une platine de retenue (10) pouvant être installée sur lesdites moitiés de l'outil, côté tête de mélange, et associée à ladite buse (41) de ladite tête de mélange qui fait saillie et occupe, pour l'essentiel, une position centrale,
**caractérisé par le fait que**
la platine de retenue (10) est reliée rigidement à la tête de mélange (40) et comporte au moins un tenon (12) qui est positionné par rapport à la buse (41) de ladite tête de mélange, s'étend dans la direction des moitiés de l'outil et est muni d'une gorge (19) s'étendant transversalement, sachant qu'au moins un logement (24), conçu pour recevoir le tenon (12) et occupant un emplacement correspondant à la disposition dudit tenon (12), est prévu dans la surface principale (23), et sachant qu'au moins un premier alésage (26) est pratiqué dans les surfaces latérales (21), afin de recevoir un élément de serrage (30) pouvant être mis en prise avec ladite gorge (19).

2. Outil de moussage selon la revendication 1, **caractérisé par le fait que** l'élément de serrage (30) est réalisé sous la forme d'un excentrique doté d'un guide coulissant (32) prévu dans le goujon (38).

3. Outil de moussage selon la revendication 1, **caractérisé par le fait que** l'élément de serrage (30) est réalisé sous la forme d'une tige qui traverse l'intégralité de la platine de réception (20) moyennant, en particulier, une disposition d'au moins un guide coulissant (32) correspondant à la d isposition du tenon (12).

4. Outil de moussage selon la revendication 2 ou 3, **caractérisé par le fait que** le guide coulissant (32) présente une fente (34) s'étendant axialement et comportant au moins deux coudes (33, 35).

5. Outil de moussage selon l'une des revendications précédentes,
**caractérisé par le fait**
**qu'**un second alésage (28), conçu pour recevoir une vis pénétrant dans le guide coulissant (32) et disposé perpendiculairement au premier alésage (26), avec lequel il est en liaison, est prévu dans la surface principale (23).
